# EUROPÄISCHE PATENTSCHRIFT

(11) **EP 3 039 755 B1**
(45) Veröffentlichungstag und Bekanntmachung des Hinweises auf die Patenterteilung: **24.02.2021**
(21) Anmeldenummer: 14755696.3
(22) Anmeldetag: 27.08.2014
(51) Int. Cl.: H01T 4/12

(54) **ÜBERSPANNUNGSABLEITER**
SURGE ARRESTER
PARASURTENSEUR

(30) Priorität: 29.08.2013 DE 102013109393
(43) Veröffentlichungstag der Anmeldung: 06.07.2016
(73) Patentinhaber: TDK Electronics AG, 81671 München (DE)
(72) Erfinder: WERNER, Frank, 13591 Berlin (DE); HOFFMANN, Robert, 12163 Berlin (DE)
(74) Vertreter: Epping - Hermann - Fischer
(86) Internationale Anmeldenummer: PCT/EP2014/068186
(87) Internationale Veröffentlichungsnummer: WO 2015/028516

(56) Entgegenhaltungen:
- EP-A2- 1 443 539
- EP-A2- 1 841 027
- EP-A2- 1 995 837
- DE-A1-102008 029 094
- JP-A- H0 362 484
- JP-A- H03 283 336
- JP-A- 2005 063 721
- US-A- 5 184 273

## Beschreibung

Ein Überspannungsableiter dient zur Begrenzung gefährlicher oder unerwünschter Überspannungen in elektrischen Leitungen und Geräten. Dadurch kann eine überspannungsbedingte Schädigung der Leitungen und Geräte vermieden werden.

Gasgefüllte Überspannungsableiter, die auch als Gasableiter bezeichnet werden, sind Überspannungsableiter, bei denen die Überspannung im Gasableiter durch das selbsttätige Zünden einer Gasentladung abgebaut wird. Sie arbeiten nach dem gasphysikalischen Prinzip der Bogenentladung, wobei sich nach Erreichen der Ableiteransprechspannung, kurz als Ansprechspannung oder als Zündspannung bezeichnet, innerhalb von Nanosekunden ein Lichtbogen im gasdichten Entladungsraum bildet. Durch die hohe Stromtragfähigkeit des Bogens wird die Überspannung effektiv kurzgeschlossen.

Die EP 1841027 A2 zeigt einen Überspannungsableiter mit exzentrisch angeordneten stiftförmigen Elektroden.Die EP 1443539 A2 zeigt einen Überspannungsableiter mit kegelstumpfförmigen Elektroden. Die DE 102008029094 A1 zeigt einen Überspannungsableiter, bei dem zwischen Isolatorkörper und Elektroden eine Abstufung ist.

Konventionelle Gasableiter haben üblicherweise Ansprechspannungen von 70V bis zu einigen Kilovolt, was ihren Einsatzbereich begrenzt. Bislang gibt es gasgefüllte Überspannungsableiter bis maximal 10kV Ansprechspannung.

Für den Schutz von Mittelspannungstransformatoren im Effektivspannungsbereich von 3kVrms bis 36kVrms (die Endung "rms" an die Einheit anschließend bezeichnet einen Effektivwert) vor Überspannungen, die beispielsweise bei Blitzeinschlag auftreten können, können Überspannungsableiter eingesetzt werden, die eine Reihenschaltung von Metalloxidvaristoren und Luftfunkenstrecke umfassen, wie beispielsweise in der CA 2027288 beschrieben. Der Nachteil der offenen Luftfunkenstrecke ist, dass die Ansprechspannung abhängig von den Umgebungsbedingungen ist. Um diesen Effekt zu mindern, muss die Luftfunkenstrecke durch geeignete Maßnahmen geschützt werden, was bisher nur unzureichend gelungen ist.

Gasgefüllte Überspannungsableiter werden zu dem oben genannten Zweck nicht eingesetzt, da keine Ableiter mit entsprechend hohen Ansprechspannungen zur Verfügung stehen.

Es stellt sich die Aufgabe, einen alternativen Überspannungsableiter bereitzustellen, der zum Schutz vor hohen Spannungen verwendet werden kann. Ein solcher Überspannungsableiter soll geeignet sein zum Schutz von Mittelspannungstransformatoren.

Die Aufgabe wird gelöst durch einen Überspannungsableiter mit den Merkmalen des Patentanspruchs 1.

Der Überspannungsableiter umfasst einen gasdichten Entladungsraum gebildet durch wenigstens einen Isolierkörper und zwei Elektroden, wobei die Elektroden jeweils ein sich in den Entladungsraum erstreckendes stiftförmig freies Ende aufweisen und die freien Enden aufeinander ausgerichtet sind, und wobei die Elektroden einen Elektrodenabstand voneinander aufweisen und ein Wandabstand der Abstand zwischen der Außenseite der freien Enden und der benachbarten Isolierkörperinnenwand ist, und wobei der Elektrodenabstand gleich dem Doppelten des Wandabstands oder kleiner als das Doppelte des Wandabstands ist.

Der Entladungsraum ist ein gasdicht verschlossener Hohlraum, der von der Isolierkörperinnenwand sowie den Elektroden an den Stirnseiten des Isolierkörpers begrenzt ist. Die Elektroden verschließen die Stirnseiten des Isolierkörpers hermetisch. Dies kann durch eine Vakuumdichtverbindung mittels Hartlot geschehen.

Der Vorteil eines solchen Überspannungsableiters ist, dass die Ansprechspannung des gasdichten Überspannungsableiters unabhängig von den Umgebungsbedingungen ist.

Dieser Überspannungsableiter funktioniert auch bei hohen Ansprechspannungen. Dies wird durch die Geometrievorgaben für das Verhältnis von Elektrodenabstand und Wandabstand erreicht. Der Elektrodenabstand ist gleich dem Doppelten des Wandabstandes oder geringer als das Doppelte des Wandabstandes. Für den Elektrodenabstand L und den Wandabstand a ergibt sich damit formelmäßig: L =< 2*a. Diese Dimensionierungsvorschrift erlaubt die Bereitstellung von Überspannungsableitern mit hoher Ansprechspannung und zuverlässigem Zündverhalten, bei denen unerwünschte Zündungen bereits bei Betriebswechselspannung vermieden werden.

Bei Einhaltung dieser Geometrievorschrift erfolgt die Entladung nur über den Spalt zwischen den Elektroden. Undefinierte Zündungen und Nebenentladungen, die entlang der Isolierkörperinnenwand verlaufen, werden vermieden. Somit erfolgt die Zündung zuverlässig nach Überschreiten einer vorgegebenen Ansprechspannung. Fehlzündungen bei geringeren Spannungen und Wandentladungen werden vermieden. Letzt genannte Aspekte gelten insbesondere, da auf Zündstriche, insbesondere entlang der Isolierkörperinnenwand, verzichtet wird.

Durch die beschriebene Bauform des Überspannungsableiters, unterstützt durch den Verzicht auf Zündstriche, wird zuverlässig vermieden, dass es bereits beim Anlegen der Betriebswechselspannung, beispielsweise in Effektivspannungsbereichen von 10kVrms bis 30kVrms, zum ungewollten Zünden der Gasentladungsstrecke kommt.

Die Ansprechspannung des Ableiters Udc liegt deutlich über dem Maximalwert der Betriebspannung Uac. Es gilt folgender formelmäßiger Zusammenhang: Udc > Uac*sqrt(2)*1,2; wobei sqrt(2) die Quadratwurzel von 2 ist. Für eine Betriebswechselspannung von 10kV ergibt sich somit beispielsweise eine Ansprechspannung des Ableiters von ca. 17kV.

In einer vorteilhaften Ausführung weisen die Elektroden jeweils einen Basisbereich auf, der stirnseitig auf dem Isolierkörper angeordnet ist, sowie das freie Ende, das sich in den Entladungsraum erstreckt. Der Basisbereich kann auf der Stirnseite des Isolierkörpers aufgesetzt sein. Alternativ kann der Basisbereich zumindest teilweise im Isolierkörper an dessen Stirnseite versenkt sein.

Eine solche Elektrode kann einstückig ausgebildet sein oder zwei oder mehr miteinander verbundene Teile umfassen. Letzteres ermöglicht die Materialoptimierung hinsichtlich der unterschiedlichen Anforderungen an die beiden Elektrodenbereiche. Die Bereiche können durch übliche Verbindungsverfahren miteinander verbunden werden, beispielsweise Schweißen oder Hartlötung.

Die freien Enden sind stiftförmig ausgebildet. Ein stiftförmiges freies Ende ist langgestreckt, beispielsweise im Wesentlichen zylinderförmig, insbesondere kreiszylinderförmig. Der Basisbereich ist im Wesentlichen scheibenförmig ausgebildet, um die Stirnseiten des Isolierkörpers zu verschließen und somit den gasdichten Entladungsraum zu bilden. Die scheibenförmigen Basisbereiche haben im Vergleich zu Länge oder Breite ihrer Grundfläche eine geringe Höhe. Die Scheiben können rund sein oder eine andere Grundflächenform, beispielsweise eine eckige Form, haben.

In einer Ausführung weist der Basisbereich zwischen dem an der Isolierkörperstirnseite angeordneten Bereich und dem freien Ende eine oder mehrere Erhöhungen auf, die umlaufend angeordnet sind und sich in Richtung des Entladungsraumes erstrecken. Eine solche Erhöhung kann als kreisförmige Erhebung ausgebildet sein. Es sind auch mehrere Erhöhungen, die entlang einer umlaufenden Bahn, z.B. eines Kreises, um das freie Ende angeordnet sind, denkbar. Diese Erhöhungen ermöglichen bei der Montage, die Elektrode an der Stirnseite des Isolierkörpers zu positionieren und in die stirnseitige Öffnung einzupassen.

Der Isolierkörper kann hohlzylinderförmig, insbesondere hohlkreiszylinderförmig sein, was mit einer einfachen Fertigung einhergeht.

Der Entladungsraum ist gasgefüllt. Die Überspannung wird durch das selbsttätige Zünden der Gasentladung abgebaut. Die Gasfüllung des Entladungsraumes umfasst Stickstoff oder Gasmischungen von Stickstoff und Wasserstoff das als Isoliergas dient.

Ein solcher Überspannungsableiter erlaubt Ansprechspannungen, die größer als 10kV, insbesondere größer als 15kV, sind.

Der Elektrodenabstand beträgt zwischen 8mm und 16mm und der Wandabstand beträgt zwischen 5mm und 9mm. Diese Dimensionierung ermöglicht hohe Ansprechspannungen. Vorteilhafte Ausgestaltungen des Überspannungsableiters sind Gegenstand von Unteransprüchen.

Die oben beschriebenen Anordnungen werden im Folgenden an Hand von Ausführungsbeispielen näher erläutert.

Die nachfolgend beschriebenen Zeichnungen sind nicht als maßstabsgetreu aufzufassen, vielmehr können die Darstellungen in einzelnen Dimensionen vergrößert, verkleinert oder auch verzerrt dargestellt sein.

### Es zeigen:

- Figur 1: eine perspektivische Darstellung eines Ausführungsbeispiels eines Überspannungsableiters und
- Figur 2: eine Schnittdarstellung dieses Überspannungsableiters.

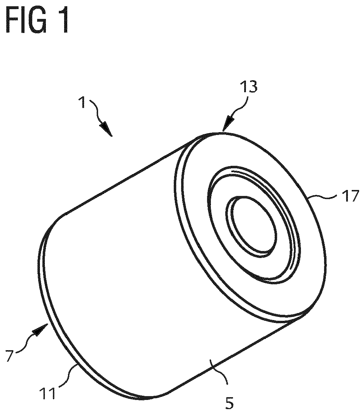

Figur 1 zeigt eine perspektivische Darstellung eines Überspannungsableiters 1. Dieser weist einen hohlzylinderförmigen Isolierkörper 5 auf. An dessen Stirnseiten sind eine erste Elektrode 7 und eine zweite Elektrode 13 angeordnet, welche einen Hohlraum im Inneren des Überspannungsableiters 1 begrenzen, der als gasdichter Entladungsraum dient.

In der Figur 1 sind lediglich die Basisbereiche 11, 17 der Elektroden 7, 13 zu sehen, welche den Isolierkörper verschließen, um den gasdichten Entladungsraum zu bilden.

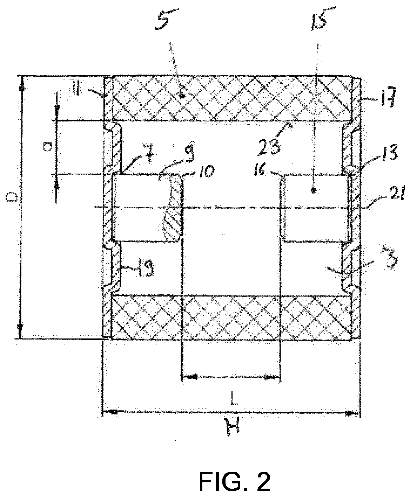

Figur 2 zeigt eine Schnittdarstellung entlang der Längsachse 21 durch den Überspannungsableiter 1, der in Figur 1 dargestellt ist.

Der Überspannungsableiter 1 umfasst einen gasdichten Entladungsraum 3, der gebildet wird durch den hohlkreiszylinderförmigen Isolierkörper 5 und den an dessen Stirnseiten angeordneten ersten und zweiten Elektroden 7, 13. Der Isolierkörper 5 kann auch eine andere Form mit einem Loch oder einer Aussparung aufweisen. Er ist aus nichtleitendem Material, beispielsweise Keramik.

Die erste und die zweite Elektrode 7, 13 haben jeweils scheibenförmige Basisbereiche 11, 17 sowie in den Entladungsraum 3 hineinragende freie Enden 9, 15, sodass die freien Enden 9, 15 in den vom Isolierkörper 5 umgebenen Raum ragen. Der Basisbereich 11, 17 ist derart mit dem Isolierkörper 5 verbunden, dass der Hohlraum gasdicht verschlossen ist. Über die Außenseiten der Basisbereiche 11, 17 erfolgt die Außenkontaktierung des Überspannungsableiters 1.

Die freien Enden 9, 15, sind im Zentrum der Basisbereiche 11, 17 angeordnet. Sie ragen in den Entladungsraum 3 und sind aufeinander ausgerichtet. Zwischen den freien Enden 9, 15 erfolgt die Gasentladung. Die freien Enden 9, 15 sind stiftförmig ausgebildet. In diesem Ausführungsbeispiel sind sie kreiszylinderförmig ausgestaltet. Andere Formen, beispielsweise kegelförmig, sind denkbar. In diesem Ausführungsbeispiel haben die freien Enden 9, 15 einen Kopfbereich 10, 16, in dem sie abgeschrägt sind. Andere Ausgestaltungen eines solchen Kopfbereichs 10, 16 haben andere Formen der Querschnittsverringerung, beispielsweise eine Spitze, Kante oder Stufe.

Die Basisbereiche 11, 17 weisen in diesem Ausführungsbeispiel in den Entladungsraum 3 hineinreichende ringförmig umlaufende Erhöhungen 19 auf, die zwischen dem Bereich, der auf der Isolierkörperstirnseite angeordnet ist, und dem freien Ende 9, 15 angeordnet sind. Alternativ sind auch mehrere runde, strichförmige oder anders geformte Erhöhungen 19 denkbar, die umlaufend an der Isolierkörperinnenwand 23 angeordnet sind. Diese Erhöhung 19 beziehungsweise Erhöhungen ermöglichen bei der Montage die genaue Positionierung der Elektroden 7, 13 an den Stirnseiten des Isolierkörpers 5. Die Erhöhung 19 reicht nicht so weit ins Entladungsrauminnere wie das freie Ende 9, 15. Solche Erhöhungen 19 können beispielsweise durch Stanzen geformt werden.

Die Elektroden 7, 13 können metallen sein, wobei für den Basisbereich 11, 17 und das freie Ende 9, 15 verschiedene Materialen verwendet werden können. Dies erlaubt eine Materialoptimierung hinsichtlich der unterschiedlichen Elektrodenbereiche und ihrer Funktionen.

In diesem Ausführungsbeispiel sind sowohl der Isolierkörper 3 als auch die Elektroden 7, 13, insbesondere deren freien Enden 9, 15, rotationssymmetrisch um die Längsachse 21 des Überspannungsableiters 1 ausgebildet. Zudem ist dieses Ausführungsbeispiel spiegelsymmetrisch. Insbesondere die Erhöhungen 19 und/oder die Basisbereiche 11, 17 können hinsichtlich ihrer Form beziehungsweise ihrer Grundfläche von der Rotationssymmetrie abweichen. Denkbar sind Basisbereiche 11, 17 mit eckiger oder einseitig gerader Grundfläche, um die Montage des Bauelements zu erleichtern.

Zwischen den Stirnseiten der freien Enden 9, 15 der Elektroden 7, 13 ist der Elektrodenabstand L definiert, der in diesem Ausführungsbeispiel parallel zur Längsachse 21 verläuft. Die freien Enden 9, 15 weisen einen Wandabstand a zur Isolierkörperinnenwand 23 auf. Der Wandabstand a ist der Abstand zwischen der Außenseite des freien Endes 9, 15 und der benachbarten Isolierkörperinnenwand 23; er verläuft in diesem Ausführungsbeispiel senkrecht zur Längsachse 21. Der Elektrodenabstand L ist so gewählt, dass er gleich dem Doppelten oder wenigstens weniger als das Doppelte des Wandabstandes a ist, also L =< 2*a. Diese Bedingung soll auch bei freien Enden 9, 15 und/oder einem Isolierkörpers 5, deren Durchmesser entlang der Längsachse 21 variieren, für die verschiedenen Wandabstände a jenseits der Verbindungsstelle mit oder dem Übergang zum Basisbereich sowie vorzugsweise im Kopfbereich der freien Enden erfüllt sein.

Weitere Kenngrößen des Überspannungsableiters sind seine Höhe H, gemessen zwischen den Außenseiten der Basisbereiche 11, 17 der Elektroden 7, 13 und sein Durchmesser D, der dem Außendurchmesser des Isolierkörpers 5 entspricht.

Der Außendurchmesser D eines solchen Überspannungsableiters 1 kann beispielsweise 30mm bis 36mm betragen, die Höhe H 22mm bis 36mm. Der Elektrodenabstand L beträgt zwischen 8mm und 16mm und der Wandabstand a beträgt zwischen 5mm und 9mm.

Ein solcher gasgefüllter Überspannungsableiter 1 kann Ansprechspannungen von 17kV bis 34kV haben und ist geeignet für den Einsatz bei Betriebswechselspannungen von 10kVrms bis 20kVrms. Die Gasfüllung : umfasst Stickstoff oder Gasmischungen mit Stickstoff und Wasserstoff.

Ein solcher Überspannungsableiter hat nach der Norm IEC 60099-1 eine Belastungsfähigkeit von 22 Impulsen von 10kA und 8/20µs, zwei Impulsen von 100kA und 4/10µs sowie 20 Impulsen von 250A und 2000µs.

### Bezugszeichenliste

- 1: Überspannungsableiter
- 3: Entladungsraum
- 5: Isolierkörper
- 7, 13: Elektrode
- 9, 15: freies Ende
- 10, 16: Kopfbereich
- 11, 17: Basisbereich
- 19: Erhöhung
- 21: Längsachse
- L: Elektrodenabstand
- a: Wandabstand
- D: Durchmesser
- H: Höhe

## Patentansprüche

1. Überspannungsableiter (1) mit
einem gasdichten Entladungsraum (3) gebildet durch wenigstens einen Isolierkörper (5) und zwei Elektroden (7, 13), wob
ei die Elektroden (7, 13) jeweils ein sich in den Entladungsraum (3) erstreckendes stiftförmig freies Ende aufweisen und die freien Enden (9, 15) aufeinander ausgerichtet sind,
wobei die Elektroden einen Elektrodenabstand (L) voneinander aufweisen und ein Wandabstand (a) der Abstand zwischen der Außenseite der freien Enden (9, 15) und der benachbarten Isolierkörperinnenwand (23) ist,
wobei der Elektrodenabstand (L) gleich dem Doppelten des Wandabstands (a) oder kleiner als das Doppelte des Wandabstands (a) ist,
wobei der Elektrodenabstand (L) zwischen 8 mm und 16 mm beträgt und der Wandabstand (a) zwischen 5 mm und 9 mm beträgt,
wobei der Entladungsraum (3) eine Stickstoff umfassende Gasfüllung oder eine Stickstoff und Wasserstoff aufweisende Gasfüllung aufweist und
wobei zumindest die Isolierkörperinnenwand (23) des Entladungsraumes (3) zündstrichfrei ist.

2. Überspannungsableiter (1) nach Anspruch 1, bei dem jede der Elektroden (7, 13) einen Basisbereich (11, 17) aufweist, der stirnseitig am Isolierkörper (5) angeordnet ist, und das freie Ende (9, 15), das sich in den Entladungsraum (3) erstreckt.

3. Überspannungsableiter (1) nach Anspruch 2, bei dem der Basisbereich (11, 17) scheibenförmig ausgebildet ist.

4. Überspannungsableiter (1) nach einem der Ansprüche 2 bis 3, bei dem der Basisbereich (11, 17) zwischen seinem an der Isolierkörperstirnseite angeordneten Bereich und dem freien Ende (9, 15) eine oder mehrere Erhöhungen (19) die zumindest teilweise umlaufend angeordnet sind, aufweist.

5. Überspannungsableiter (1) nach einem der Ansprüche 1 bis 4, bei denen der Isolierkörper (5) hohlzylinderförmig ist.

## Claims

1. Surge arrester (1) comprising
a gas-tight discharge chamber (3) that is formed by at least one insulating body (5) and two electrodes (7, 13), wherein the electrodes (7, 13) each have a pin-shaped free end that extends into the discharge chamber (3) and the free ends (9, 15) are aligned with respect to one another,
wherein the electrodes have an electrode spacing (L) with respect to one another and a wall spacing (a) is the spacing between the outer face of the free ends (9, 15) and the adjacent insulating body inner wall (23), wherein the electrode spacing (L) is equal to twice the wall spacing (a) or is less than twice the wall spacing (a),
wherein the electrode spacing (L) is between 8 mm and 16 mm and the wall spacing (a) is between 5 mm and 9 mm, wherein the discharge chamber (3) comprises a gas charge that comprises nitrogen or a gas charge that comprises nitrogen and hydrogen, and
wherein at least the insulating body inner wall (23) of the discharge chamber (3) is free of an arcing strip.

2. Surge arrester (1) according to Claim 1, in which each of the electrodes (7, 13) comprises a base region (11, 17) that is arranged at the end face on the insulating body (5), and the free end (9, 15) that extends into the discharge chamber (3).

3. Surge arrester (1) according to Claim 2, in which the base region (11, 17) is embodied in a disc-shaped manner.

4. Surge arrester (1) according to either of Claims 2 and 3, in which the base region (11, 17) comprises, between its region that is arranged on the insulating body end face and the free end (9, 15), one or more elevations (19) that are arranged at least in part in a circumferential manner.

5. Surge arrester (1) according to one of Claims 1 to 4, in which the insulating body (5) has a hollow cylindrical shape.

## Revendications

1. Parafoudre (1) comprenant
un espace de décharge (3) étanche aux gaz qui est formé par au moins un corps isolant (5) et deux électrodes (7, 13),
les électrodes (7, 13) comportant chacune une extrémité libre en forme de broche qui s'étend jusque dans l'espace de décharge (3) et les extrémités libres (9, 15) étant alignées l'une avec l'autre,
les électrodes présentant un espacement d'électrodes (L) l'une par rapport à l'autre et un espacement de paroi (a) étant la distance entre le côté extérieur des extrémités libres (9, 15) et la paroi intérieure adjacente (23) du corps isolant,
l'espacement d'électrodes (L) étant égal à deux fois l'espacement de paroi (a) ou inférieur à deux fois l'espacement de paroi (a),
l'espacement d'électrodes (L) étant compris entre 8 mm et 16 mm et l'espacement de paroi (a) étant compris entre 5 mm et 9 mm,
l'espace de décharge (3) comportant un remplissage de gaz comprenant de l'azote ou un remplissage de gaz comprenant de l'azote et de l'hydrogène et
au moins la paroi intérieure (23) du corps isolant de l'espace de décharge (3) étant exempte de marques d'allumage.

2. Parafoudre (1) selon la revendication 1, dans lequel chacune des électrodes (7, 13) comporte une région de base (11, 17), qui est disposée du côté frontal au niveau du corps isolant (5), et l'extrémité libre (9, 15), qui s'étend dans l'espace de décharge (3) .

3. Parafoudre (1) selon la revendication 2, dans lequel la région de base (11, 17) est en forme de disque.

4. Parafoudre (1) selon l'une des revendications 2 et 3, dans lequel la région de base (11, 17) comporte, entre sa région disposée sur le côté frontal du corps isolant et l'extrémité libre (9, 15), une ou plusieurs élévations (19) qui sont au moins partiellement disposées circonférentiellement.

5. Parafoudre (1) selon l'une des revendications 1 à 4, dans lequel le corps isolant (5) est en forme de cylindre creux.
